# EUROPÄISCHE PATENTSCHRIFT

(11) **EP 1 802 500 B1**
(45) Veröffentlichungstag und Bekanntmachung des Hinweises auf die Patenterteilung: **08.08.2012**
(21) Anmeldenummer: 05788342.3
(22) Anmeldetag: 30.09.2005
(51) Int. Cl.: F16H 61/21, B60W 10/06, B60W 10/18, B60W 30/18, B60T 7/12

(54) **VERFAHREN ZUR STEUERUNG EINES ANTRIEBSSYSTEMS UND/ODER EINES RADBREMSSYSTEMS**
METHOD FOR CONTROLLING A DRIVE SYSTEM AND/OR A WHEEL BRAKE SYSTEM
PROCEDE POUR COMMANDER UN SYSTEME DE TRANSMISSION ET/OU UN SYSTEME DE FREIN DE ROUES

(30) Priorität: 20.10.2004 DE 102004050995
(43) Veröffentlichungstag der Anmeldung: 04.07.2007
(73) Patentinhaber: Bayerische Motoren Werke Aktiengesellschaft, 80809 München (DE)
(72) Erfinder: WANNER, Peter, 85591 Vaterstetten (DE); PFEIFFER, Andreas, 83607 Holzkirchen (DE); FUCHS, Emanuel, Rochester, MI 48307 (US); SCHUMACHER, Hubert, 86179 Augsburg (DE)
(86) Internationale Anmeldenummer: PCT/EP2005/010552
(87) Internationale Veröffentlichungsnummer: WO 2006/042628

(56) Entgegenhaltungen:
- DE-A1- 10 229 035
- DE-C1- 19 916 637
- US-A1- 2003 036 839

## Beschreibung

Die Erfindung bezieht sich auf ein Verfahren zur Steuerung eines Antriebssystems und/oder eines Radbremssystems.

Bei Kraftfahrzeugen mit Fahrerassistenzsystemen, durch die insbesondere eine vorgegebene Geschwindigkeit oder ein vorgegebener Abstand zum vorausfahrenden Fahrzeug konstant zu halten ist, sind bereits Verfahren bekannt, durch die ein Antriebssystem und/oder ein Radbremssystem zum Erreichen der Fahrerassistenz-Ziele angesteuert werden. Hierbei treten immer wieder Probleme insbesondere bei Bergabfahrten auf. Entweder werden die Radbremssysteme überhitzt oder Aktionen des Antriebssystems, wie Rückschaltungen automatisierter Getriebe oder Wechsel der Schubbetriebsarten (befeuerte/unbefeuerte) führen zu Komforteinbußen.

Aus den Druckschriften US 2003/036839 A1, DE 102 29 035 A1 und DE 199 16 637 C1 sind Verfahren zur Steuerung eines Antriebssystems und/oder eines Radbremssystems bekannt, die grundsätzlich ein mögliches Antriebsbremsmoment zur Entlastung des Radbremssystems einsetzen.

Es ist Aufgabe der Erfindung, ein Verfahren zur Steuerung eines Antriebssystems und/oder eines Radbremssystems im Hinblick auf eine

Entlastung des Radbremssystems bei gleichzeitiger Komfortberücksichtigung zu verbessern.

Diese Aufgabe wird erfindungsgemäß durch die Gegenstände der unabhängigen Patentansprüche gelöst. Vorteilhafte Weiterbildungen sind die Gegenstände der abhängigen Patentansprüche.

Bei dem erfindungsgemäßen Verfahren zur Steuerung eines Antriebssystems und/oder eines Radbremssystems wird in besonders vorteilhafter Weise ein auf die Räder eines Kraftfahrzeugs auszuübendes Gesamtbremsmoment bestehend aus einem Antriebsbremsmoment und/oder einem Radbremsmoment derart eingestellt, dass das Soll-Radbremsmoment um einen Betrag reduziert wird, der durch eine (vorzugsweise maximal) mögliche Erhöhung des Antriebsbremsmoments kompensierbar ist, wenn das Radbremssystem besonders belastet wird (insbesondere bei Bergabfahrt) und wenn die Fahrzeuggeschwindigkeit in etwa konstant ist (stationäre Betriebsweise). Die Erhöhung des Antriebsbremsmoments wird jedoch auf einen vorgegebenen (z. B. im befeuerten Schubbetrieb erreichbaren) Betrag begrenzt, wenn das Radbremssystem weniger stark belastet ist oder sich die Fahrzeuggeschwindigkeit ändert (dynamische Betriebsweise).

Das Gesamtbremsmoment kann z. B. durch den mittels einer Brems-und/oder Fahrpedalinterpretation ermittelten Fahrerwunsch oder durch ein Fahrerassistenzsystem ("Tempomat", "ACC" usw.) vorgegeben werden. Die Erfindung ist besonders vorteilhaft bei einer Anwendung in Kraftfahrzeugen mit Fahrerassistenzsystemen, die ein Konstanthalten einer vorgegebenen Geschwindigkeit zum Ziel haben.

Das Vorliegen einer definierten erhöhten Belastung des Radbremssystems kann erkannt werden, wenn zum Beispiel für eine vorgegebene

Mindestzeitdauer eine vorgegebene Radbremsmomentschwelle überschritten wird. Aber auch Betriebsparameter wie dem Radbremssystem zugehörige Temperaturen oder Bremsdruckwerte und Drehzahl oder Geschwindigkeit können zur Schätzung der Belastung des Radbremssystems herangezogen werden. Navigationsdaten, durch die eine Bergabfahrt vorausschauend erkannt werden kann, können sogar zur Schätzung einer zu erwartenden Belastung des Radbremssystems herangezogen werden.

Das Radbremsmoment ist der Anteil des auf die Räder ausgeübten Gesamtbremsmoments, der durch das Radbremssystem ausgeübt wird.

Das Antriebsbremsmoment ist vorzugsweise der Anteil des auf die Räder ausgeübten Gesamtbremsmoments, das durch das gesamte Antriebssystem bestehend aus mindestens einem Motor und einem Getriebe ausgeübt wird, wobei sowohl der Motor als auch das Getriebe elektronisch steuerbar sein kann.

Die Reduzierung des Soll-Radbremsmoments bedeutet zunächst eine rechnerische mögliche Reduzierung. Denn wenn bei einem nicht-by-wire-Bremssystem der Fahrer das Bremspedal betätigt, kann gegebenenfalls eine vom Radbremssystem durchgeführte tatsächliche Reduzierung des Radbremsmoments nicht (sofort) durchgeführt werden. In diesem Fall wird jedoch das Antriebsbremsmoment erfindungsgemäß trotzdem erhöht, so dass zunächst eine Addition des erhöhten Antriebsbremsmoments auf das Gesamtbremsmoment durchgeführt wird. Es wird jedoch erwartet, dass anschließend der Fahrer durch die dadurch entstehende spürbare Bremswirkung den Radbremsdruck durch Rücknahme des Bremspedal reduziert. Der Fahrer wird somit als Teil des erfindungsgemäßen Verfahrens hinsichtlich der tatsächlichen Reduzierung des Radbremsdrucks eingesetzt. Im Falle einer automatischen ftadbremsdruckregelüng ohne Betätigung des Bremspedals oder im Falle einer automatischen Radbremsdruckregelung bei Eingriffen eines Fahrerassistenzsystems, insbesondere eines Geschwindigkeitsregelsystems, kann die Reduzierung des Soll-Radbremsmoments unverzüglich und voll automatisch durchgeführt werden.

Der Erfindung liegen folgende Erkenntnisse zugrunde:

Erstes Ziel ist die Reduzierung der Bremsbelastung, wobei das Überschreiten der Bremsbelastung auch das zu erwartende Überschreiten der Bremsbelastung umfasst, so dass die Erfindung auch präventiv eingreift, bevor das Radbremssystem tatsächlich stark belastet ist. Grundsätzlich soll unter Berücksichtigung von Anforderungen an das Antriebssystem zur Entlastung des Radbremssystems ein möglichst hohes Antriebsbremsmoment eingestellt werden. Dabei kann die Erhöhung des Antriebsbremsmoments zunächst einen beliebigen Verlauf haben und vorzugsweise immer maximal möglich eingestellt werden. Aber zweites Ziel ist auch die Erhöhung des Komforts durch Berücksichtigung von Fahrzuständen, in denen Radmomentensprünge für den Fahrer besonders spürbar sind. Durch Versuche wurde festgestellt, dass sich Änderungen, insbesondere sprunghafte Änderungen, wie bei einem Wechsel vom befeuerten Schubbetrieb in den unbefeuerten Schubbetrieb und umgekehrt, im Verlauf der Erhöhung des Antriebsbremsmoments hinsichtlich des Komforts bei dynamischer Betriebsweise besonders nachteilig auswirken können. Eine dynamische Betriebsweise äußert sich insbesondere in einer Änderung der Fahrzeuggeschwindigkeit. Daher wird vorzugsweise eine Erhöhung des Antriebsbremsmoments ohne Begrenzung nur bei zumindest nahezu konstanter Fahrzeuggeschwindigkeit zugelassen.

In der Zeichnung ist ein Ausführungsbeispiel der Erfindung dargestellt. Es zeigt für den Fall, dass das Gesamtbremsmomentdurch ein Fahrerassistenzsystem als Sollwert vorgegeben wird,
- Fig. 1: eine mögliche erfindungsgemäße Arbeitsweise eines Fahrzeugsystemverbunds zur Einstellung eines Gesamtbremsmoments mit unbegrenztem Antriebsbremsmoment und
- Fig. 2: eine mögliche erfindungsgemäße Arbeitsweise eines Fahrzeugsystemverbunds zur Einstellung eines Gesamtbremsmoments mit begrenztem Antriebsbremsmoment.

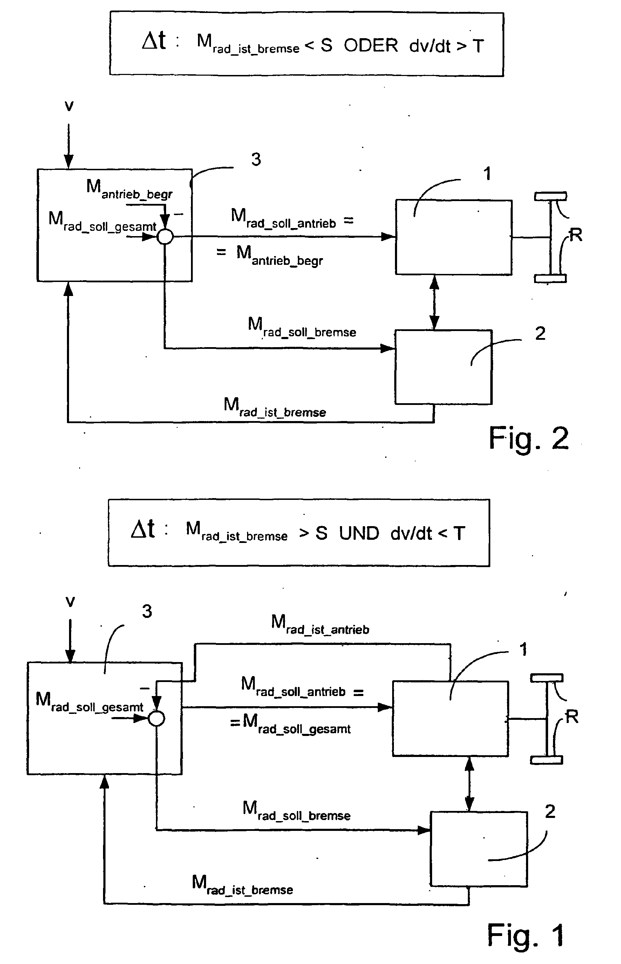

In den Figuren 1 und 2 ist jeweils der gleiche Fahrzeugsystemverbund, bestehend aus einem Antriebssystem 1, einem Radbremssystem 2 und einem Fahrerassistenzsystem 3, dargestellt. Die Systeme 1 bis 3 weisen beispielsweise jeweils ein elektronisches Steuergerät auf, die üblicherweise über Datenbussysteme miteinander in Verbindung stehen. Zumindest mittels eines dieser Steuergeräte kann das erfindungsgemäße Verfahren ausgeführt werden.

Im vorliegenden Ausführungsbeispiel soll das Fahrerassistenzsystem 3 zum Konstanthalten einer vorgegebenen Soll-Fahrzeuggeschwindigkeit ein hierfür erforderliches Gesamtbremsmoment M_{rad_soll_gesamt} bestimmen. Das Gesamtbremsmoment M_{rad}__{soll_gesamt} entspricht den auf die Antriebsräder R wirkenden Radmomenten.

Das auf die Räder R eines Kraftfahrzeugs auszuübende Gesamtbremsmoment (M_{rad_soll_gesamt}) kann grundsätzlich aus aus einen Antriebsbremsmoment (M_{rad_soll_antrieb}) und/oder einem Radbremsmoment (M_{rad_soll_bremse)} bestehen. Das Ist-Radbremsmoment M_{rad_ist_bremse} wird hier vom Fahrerassistenzsystem 3 erfasst und hinsichtlich der Belastung des Radbremssystems überwacht.

Wenn eine definierte erhöhte Belastung des Radbremssystems für eine vorgegebene Mindestzeitdauer überschritten wird und die Änderung der Fahrzeuggeschwindigkeit v innerhalb eines vorgegebenen Zeitfensters Δt, das gleich der vorgegebenen Mindestzeitdauer sein kann, einen Toleranzbereich T um Null nicht überschritten hat, wird das Soll-Radbremsmoment M_{rad_soll_bremse} um einen Betrag reduziert wird, der durch eine vorzugsweise maximal mögliche Erhöhung des Antriebsbremsmoments (M_{rad_soll_antrieb}= M_{antrieb_max}) kompensierbar ist. Dazu gibt das Steuergerät des Fahrerassistenzsystems 3 eine Anforderung an ein Steuergerät des Antriebsystems 1 aus, in der das Gesamtbremsmoment M_{rad_soll_gesamt} als Soll-Antriebsbremsmoment M_{rad_soll_antheb} ausgegeben wird. Das Antriebssystem 1 entscheidet abhängig von weiteren Betriebsparametern, welches maximal mögliche Antriebsbremsmoment M_{antrieb_max} jeweils eingestellt wird. Das daraus resultierende Ist-Antriebsbremsmoment M_{rad_ist_antrieb} wird dem Steuergerät des Fahrerassistenzsystems 3 mitgeteilt. Das Steuergerät des Fahrerassistenzsystems 3 bildet die Differenz zwischen dem Gesamtbremsmoment M_{rad_soll_gesamt} und dem Ist-Antriebsbremsmoment M_{rad_ist_antrieb} und gibt diese Differenz als Soll- Radbremsmoment M_{rad_soll_bremse} an das Steuergerät des Radbremssystems 2 aus (Fig. 1). Die Differenzbildung und Ausgabe des Soll- Radbremsmoment M_{rad_soll_bremse} könnte auch von einem Steuergerät des Antriebssystems 1 vorgenommen werden.

Wenn aber die definierte erhöhte Belastung des Radbremssystems 2 nicht für eine vorgegebene Mindestzeitdauer überschritten wird oder die Änderung der Fahrzeuggeschwindigkeit v innerhalb des vorgegebenen Zeitfensters Δt, das gleich der vorgegebenen Mindestzeitdauer sein kann, einen Toleranzbereich T um Null überschritten hat, wird die Erhöhung des Antriebsbremsmoments M_{rad_soll_antrieb} auf einen aus Komfortgesichtspunkten optimierten Betrag (beispielsweise auf einen im befeuerten Schubbetrieb erreichbaren Betrag) begrenzt. Dazu gibt das Steuergerät des Fahrerassistenzsystems 3 eine Anforderung an das Steuergerät des Antriebsystems 1 aus, in der bereits das begrenzte Soll-Antriebsbremsmoment (M_{rad_soll_antrieb}= M_{antrieb_begr}) ausgegeben wird. Das begrenzte Soll-Antriebsbremsmoment M_{antrieb_begr} kann konstant gehalten werden. Das Antriebssystem 1 richtet sich nach dieser Anforderung. Das Steuergerät des Fahrerassistenzsystems 3 bildet die Differenz zwischen dem Gesamtbremsmoment M_{rad_soll_gesamt} und dem begrenzten Soll-Antriebsbremsmoment M_{antrieb_begr} und gibt diese Differenz als Soll-Radbremsmoment M_{rad_sol_bremse} an das Steuergerät des Radbremssystems 2 aus (Fig. 2).

Das gewünschte Antriebsbremsmoment kann als Kennlinie im Steuergerät des Fahrerassistenzsystem 3 abgelegt sein. Mit der Begrenzung des Soll-Antriebsbremsmoments auf das einem befeuerten Schubbetrieb zugeordneten Betrag wird insbesondere ein unkomfortables Umschalten zwischen befeuertem und unbefeuertem Schubbetrieb verhindert. Diese umschaltung ist motortechnisch nicht kontinuierlich durchführbar. Bei unbegrenzt möglicher Erhöhung des Antriebsbremsmoments im stationären Betrieb wird jedoch auch der unbefeuerte Schubbetrieb zugelassen. Hierbei kann zur maximalen Bremsunterstützung das Antriebssystem 1 nicht nur entscheiden, ob auf unbefeuerten Schubbetrieb umgeschaltet wird, sondern auch ob ggf. eine Getrieberückschaltung veranlasst wird.

Eine Begrenzung des Soll-Antriebsbremsmoments kann jedoch auch durch eine Anweisung an das Antriebssystem 1 vorgenommen werden, die eine Verhinderung der Schubabschaltung des Motors (wenn dieser eine Brennkraftmaschine ist) vorgibt.

## Patentansprüche

1. Verfahren zur Steuerung eines Antriebssystems und/oder eines Radbremssystems, bei dem ein auf die Räder eines Kraftfahrzeugs auszuübendes Gesamtbremsmoment (M_{rad_soll_gesamt}) bestehend aus einem Antriebsbremsmoment (M_{rad_soll_antrieb}) und/oder einem Radbremsmoment (M_{rad_soll_bremse}) derart eingestellt wird, dass das Soll-Radbremsmoment (M_{rad_soll_bremse}) um einen Betrag reduziert wird, der durch eine Erhöhung des Antriebsbremsmoments (M_{rad_soll_antrieb}) kompensierbar ist, wenn die Änderung der Fahrzeuggeschwindigkeit (v) innerhalb eines vorgegebenen Zeitfensters (Δt) einen Toleranzbereich um Null nicht überschritten hat.

2. Verfahren zur Steuerung eines Antriebssystems und/oder eines Radbremssystems, bei dem ein auf die Räder eines Kraftfahrzeugs auszuübendes Gesamtbremsmoment (M_{rad_soll_gesamt}) bestehend aus einem Antriebsbremsmoment (M_{rad_soll_antrieb}) und/oder einem Radbremsmoment (M_{rad_soll_bremse}) derart eingestellt wird, dass das Soll-Radbremsmoment (M_{rad_soll_bremse}) um einen Betrag reduziert wird, der durch eine Erhöhung des Antriebsbremsmoments (M_{rad_soll_antrieb}) kompensierbar ist, wenn eine definierte erhöhte Belastung des Radbremssystems überschritten wird und/oder die Änderung der Fahrzeuggeschwindigkeit (v) innerhalb eines vorgegebenen Zeitfensters (Δt) einen Toleranzbereich um Null nicht überschritten hat, wobei
der zur Reduzierung des Soll-Radbremsmoments (M_{rad_soll_bremse} ) führende Betrag entsprechend einem im befeuerten Schubbetrieb einstellbaren Antriebsbremsmoment (M_{rad_soll_antrieb}) oder einem im unbefeuerten Schubbetrieb einstellbaren Antriebsbremsmoment (M_{rad_soll_antrieb}) vorgegeben wird.

3. Verfahren nach einem der vorangegangenen Patentansprüche, **dadurch gekennzeichnet, dass** eine aus der Erhöhung des Antriebsbremsmoments entstehende Verzögerung durch entsprechende Reduzierung des Antriebsmoments im Sinne eines Konstanthaltens der vor der Erhöhung des Antriebsmoments vorliegenden Fahrzeuggeschwindigkeit rückgängig gemacht wird.

## Claims

1. A method for controlling a drive system and/or a wheel brake system, wherein a total braking torque (M_{wheel_desired_total}) to be applied to the wheels of a motor vehicle, comprising a drive braking torque (M_{wheel_desired_drive}) and/or a wheel braking torque (M_{wheel_desired_brake}), is adjusted in such a way that the desired wheel braking torque (M_{wheel_desired_brake}) is reduced by an amount that can be compensated by an increase in the drive braking torque (M_{wheel_desired_drive}) when the change in the vehicle speed (v) within a predetermined time window (Δt) has not exceeded a tolerance range around zero.

2. A method for controlling a drive system and/or a wheel brake system, wherein a total braking torque (M_{wheel_desired_total}) to be applied to the wheels of a motor vehicle, comprising a drive braking torque (M_{whee_desired_drive}) and/or a wheel braking torque (M_{wheel_desired_brake}), is adjusted in such a way that the desired wheel braking torque (M_{wheel_desired_brake}) is reduced by an amount that can be compensated by an increase in the drive braking torque (M_{wheel_desired_drive}) when a defined increased load of the wheel braking system is exceeded and/or the change in the vehicle speed (v) within a predetermined time window (Δt) has not exceeded a tolerance range around zero, wherein the amount leading to the reduction in the desired wheel braking torque (M_{wheel_desired_brake}) is predetermined in accordance with a drive braking torque (M_{wheel_desired_drive}) that can be adjusted in an operating engine coasting condition or a drive braking torque (M_{wheel_desired_drive}) that can be adjusted in a non-operating engine coasting condition.

3. A method according to either of the preceding claims, **characterised in that** a deceleration being produced from the increase in the drive braking torque is reversed by means of a corresponding reduction in the drive torque to keep the vehicle speed that was present before the increase in the drive torque constant.

## Revendications

1. Procédé de commande d'un système de transmission et/ou d'un système de freins de roues selon lequel on règle un couple de freinage total (M_{rad_soll_gesamt}) à exercer sur les roues d'un véhicule, composé d'un couple de frein moteur (M_{rad_soll_antrieb}) et/ou d'un couple de freinage de roues (M_{rad_soll_bremse}) de façon que ce couple de consigne de freinage de roues (M_{rad_soll-bremse}) soit réduit d'une valeur compensée par une augmentation du couple de freins moteur (M_{rad_soll_antrieb}) si la variation de la vitesse (v) du véhicule ne dépasse pas une plage de tolérance autour de la valeur zéro dans une fenêtre de temps (Δt) prédéfinie.

2. Procédé de commande d'un système de transmission et/ou d'un système de freins de roues selon lequel on règle un couple de freinage total (M_{rad_soll_gesamt}) à exercer sur les roues d'un véhicule, composé d'un couple de frein moteur (M_{rad_soll_antrieb}) et/ou d'un couple de freinage de roues (M_{rad_soll_bremse}) de façon que ce couple de consigne de freinage de roues (M_{rad_soll_bremse}) soit réduit d'une valeur compensée par une augmentation du couple de freins moteur (M_{rad_soll_antrieb}), si on dépasse une charge augmentée, définie, du système de freinage de roues et/ou si la variation de la vitesse (v) du véhicule ne dépasse pas une plage de tolérance autour de la valeur zéro dans une fenêtre de temps (Δt) prédéfinie, la valeur conduisant à la réduction du couple de consigne de freinage de roues (M_{rad_soll_bremse}) étant prédéfinie en fonction d'un couple de frein moteur (M_{rad_soll_antrieb}) réglable en mode de poussée avec allumage ou d'un couple de frein moteur (M_{rad_soll_antrieb}) réglable en mode de poussée sans allumage.

3. Procédé selon l'une des revendications précédentes,
**caractérisé en ce qu'**
une décélération produite par une augmentation du couple de frein moteur est neutralisée par une réduction correspondante du couple d'entraînement pour maintenir constante la vitesse du véhicule à son niveau avant l'augmentation du couple d'entraînement.
